(19) Europäisches Patentamt
European Patent Office
Office européen des brevets

(11) **EP 2 154 669 A1**

(12) **EUROPEAN PATENT APPLICATION**
published in accordance with Art. 153(4) EPC

(43) Date of publication:
**17.02.2010 Bulletin 2010/07**

(51) Int Cl.:
**G09G 3/20** (2006.01)   **G02F 1/133** (2006.01)
**G09G 3/34** (2006.01)   **G09G 3/36** (2006.01)
**H05B 37/02** (2006.01)

(21) Application number: **08741009.8**

(22) Date of filing: **01.05.2008**

(86) International application number:
**PCT/JP2008/058375**

(87) International publication number:
**WO 2008/139959 (20.11.2008 Gazette 2008/47)**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **09.05.2007 JP 2007124275**

(71) Applicant: **Sony Corporation
Tokyo 108-0075 (JP)**

(72) Inventor: **KATSU, Yoshihiro
Tokyo 108-0075 (JP)**

(74) Representative: **Thévenet, Jean-Bruno et al
Cabinet Beau de Loménie
158, rue de l'Université
75340 Paris Cédex 07 (FR)**

(54) **IMAGE DISPLAY DEVICE**

(57)   In an image display device including a light source which performs partial lighting operation, an image display device capable of improving display quality by reducing luminance non-uniformity, chromaticity non-uniformity, and the like in a display image is provided. By using an illumination light Lout from a light source 10 in which a partial lighting section 4 performs lighting as a unit, image display based on an image signal is performed in a liquid crystal display panel 2. The illumination light Lout from the light source 10 in which the partial lighting section 4 performs lighting as a unit is received with a plurality of illumination light sensors 13 in the light source 10, and photo-emission amount of each of the partial lighting sections 4 is controlled based on that photo-reception data D1. By arrangement of the illumination light sensors 13, the illumination light Lout from one of the partial lighting sections 4 is received with two or more of the illumination light sensors 13. The reliability of a value of the photo-reception data D1 from the illumination light sensor 13 improves. Thereby, even in the case where the photo-reception characteristics are varied among the illumination light sensors 13, the variation in the photo-reception characteristics is suppressed, and the variation in the photo-emission characteristics may also be reduced among the partial lighting sections 3.

FIG. 3

**Description**

TECHNICAL FIELD

The present invention relates to an image display device using a light source device including a plurality of partial lighting regions each controlled separately.

BACKGROUND ART

In recent years, there is a trend that displays have become thinner, as typified by liquid crystal televisions and plasma display panels (PDP). Among the displays, most of the displays for mobile use are made of liquid crystal systems, and are demanded to have faithful color reproductivity. As a backlight of a liquid crystal panel, although a CCFL (cold cathode fluorescent lamp) type using a fluorescent tube is the main stream, a technique using no mercury is requested for the sake of environment, and a light emitting diode (LED) and the like is regarded as a promising light source replacing the CCFL.

A backlight device using such an LED is proposed in, for example, Patent document 1 and Patent document 2. In an LED backlight device disclosed in Patent document 1, a light source is divided to a plurality of partial lighting sections, and this partial lighting section independently performs lighting operation as a unit. On the other hand, in an LED backlight device disclosed in Patent document 2, illumination light from a light source is detected with photo-reception elements, and photo-emission quantity of the light source is controlled on the basis of this detection value.

Patent document 1: Japanese Unexamined Patent Application Publication No. 2001-142409

Patent document 1: Japanese Unexamined Patent Application Publication No. 2005-302737

DISCLOSURE OF THE INVENTION

Here, in the LED backlight device in which the partial lighting section may perform lighting operation as a unit as indicated in Patent document 1, since the photo-emission intensity and the photo-emission time are varied in each of the partial lighting sections, the degree of temporal change in the photo-emission characteristics is also varied in each of the partial lighting sections. Therefore, in the case where this situation is left as it is, the variation in the photo-emission characteristics (photo-emission quantity) among the partial lighting sections is produced with time, and luminance non-uniformity, chromaticity non-uniformity, and the like occur in a display image.

Therefore, in such an LED backlight device in which the partial lighting section may perform lighting operation as a unit, it is thought that a plurality of photo-reception elements as indicated in Patent document 2 are also provided corresponding to each of the partial lighting sections, and the photo-emission quantity of each of the partial lighting sections is controlled on the basis of a detection value of the illumination light which is detected with these photo-reception elements. With such a configuration, even in the case where the degree of the temporal change in the photo-emission characteristics is varied among the partial lighting sections, it is thought that the variation in the photo-emission characteristics among the partial lighting sections may be suppressed by controlling the photo-emission quantity of each of the partial lighting sections.

However, in the photo-reception elements, it is thought that the photo-reception characteristics also change depending on the surrounding environment and aging, and the variation in the photo-reception characteristics is produced among each of the photo-reception elements. Moreover, it is also thought that a certain photo-reception element does not indicate expected photo-reception characteristics due to external factors such as adhesion of a foreign substance to a photo-reception section in the photo-reception element. In the case of such a situation, even when the photo-emission quantity (luminance) of each partial lighting section is in the normal (optimal) state, because of the result that the detection value by the photo-reception elements is not an appropriate value, the photo-emission quantity of each partial lighting section is shifted from the optimal state.

In this manner, in the light source device of the related art in which partial lighting operation is performed by using the plurality of partial lighting sections, it is difficult to reduce the variation in the photo-emission characteristics among the partial lighting sections, and there is still room for improvement. Accordingly, in an image display device using such a light source device (light source), it is also difficult to improve display quality by reducing the luminance non-uniformity, the chromaticity non-uniformity, and the like in a display image, and there is still room for improvement.

In view of the foregoing, in an image display device including a light source which performs partial lighting operation, it is an object of the present invention to provide the image display device capable of improving display quality by reducing luminance non-uniformity, chromaticity non-uniformity, and the like in a display image.

An image display device of the present invention includes: an illumination means for emitting light, and a display means for displaying an image by using light emitted from the illumination means, the illumination means including: a light source including a plurality of partial lighting sections each controlled separately; a drive means for driving the light source to allow each of the partial lighting section to be lit up separately; a plurality of photo-reception elements receiving light from the light source in which each of the partial lighting section is lit up separately; and a control means for controlling the drive means based on amount of light received with the photo-reception elements, and controlling photo-emission quantity of each of the partial lighting sections. The photo-reception elements are arranged so that light from one partial lighting section is to be received with two or more of the photo-reception elements.

In the image display device of the present invention, by using the light from the light source in which each of the partial lighting sections performs lighting as a unit, the image display is performed in the display means. The light from the light source in which the partial lighting section performs lighting as a unit is received with the plurality of photo-reception elements. On the basis of the light quantity of the light received with these photo-reception elements, the photo-emission quantity of each of the partial lighting sections is controlled. Here, by arrangement of the photo-reception elements, the light from one of the partial lighting sections is received with two or more of the photo-reception elements. Consequently, the reliability of the value of the photo-reception quantity from the photo-reception elements improves. Therefore, even in the case where the photo-reception characteristics are varied among the photo-reception elements due to deterioration with time, external factors, or the like, such variation in the photo-reception characteristics may be suppressed, and the variation in the photo-emission characteristics may also be reduced among the partial lighting sections.

In the image display device of the present invention, the control means may control a photo-reception quantity ratio to maintain an initial state value, the photo-reception quantity ratio being defined as a ratio among photo-reception quantity values in the two or more of the photo-reception elements, each of the photo-reception quantity values corresponding to light from the one partial lighting section. With such a configuration, not the photo-reception quantity value itself from each of the photo-reception elements, but the ratio of the photo-reception quantity from each of the photo-reception elements is controlled and maintained. Thus, even in the case where the value of the photo-reception quantity from each of the photo-reception elements changes with deterioration with time or the like, the variation in the photo-reception characteristics is suppressed among each of the photo-reception elements, and the variation in the photo-emission characteristics is also be reduced among the partial lighting sections.

In the image display device of the present invention, each of the photo-reception elements may be arranged so that regions, where the two or more photo-reception elements allocated to the one partial lighting section take charge of photo-reception, partly overlap one another, and so that light from the one partial lighting section in the regions partly overlapping one another may be received with the two or more photo-reception elements. Moreover, each of the photo-reception elements may be arranged so that regions, where the two or more photo-reception elements allocated to the one partial lighting section take charge of photo-reception, coincide with one another, and so that the light from the one partial lighting section in the regions coinciding with one another may be received with two or more of the photo-reception elements. The expression "the photo-reception region of the photo-reception element" means a region where the value of the photo-reception quantity obtained from that photo-reception element indicates a value equal to or larger than a certain threshold.

According to the image display device of the present invention, the light from one of the partial lighting sections is received with two or more of the photo-reception elements. Consequently, the reliability of the value of the photo-reception quantity from the photo-reception elements may improve. Therefore, even in the case where the photo-reception characteristics are varied among the photo-reception elements due to deterioration with time, external factors, or the like, such variation in the photo-reception characteristics may be suppressed, and the variation in the photo-emission characteristics may also be reduced among the partial lighting sections. Therefore, in the image display device including the light source which performs the partial lighting operation, the display quality may be improved by reducing luminance non-uniformity, chromaticity non-uniformity, and the like in a display image.

BRIEF DESCRIPTION OF THE DRAWINGS

[Fig.1] An exploded perspective view illustrating the overall configuration of an image display device (liquid crystal display device) according to an embodiment of the present invention.
[Fig.2] Schematic plan views illustrating an example of the configuration of a unit (partial lighting section) in a light source in a backlight device indicated in Fig.1.
[Fig.3] A schematic plan view illustrating an example of arrangement of the partial lighting section and an illumination light sensor in the light source of Fig.2, and a detection region in each illumination light sensor.
[Fig.4] A block diagram illustrating the over all configuration of the liquid crystal display device indicated in Fig.1.

[Fig.5] A block diagram illustrating, in detail, drive of the light source and the configuration of a control section indicated in Fig.4.

[Fig.6] A timing waveform diagram for explaining a drive pulse signal of the light source.

[Fig.7] A timing waveform diagram for explaining an example of a method of driving a liquid crystal display panel and the backlight device indicated in Fig.1.

[Fig.8] A flow chart indicating an example of correction process for photo-reception data according to the embodiment of the present invention.

[Fig.9] A schematic plan view illustrating arrangement of a partial lighting section and an illumination light sensor in a light source according to a modification of the present invention, and a detection region in each illumination light sensor.

[Fig.10] A schematic plan view illustrating arrangement of a partial lighting section and an illumination light sensor in a light source according to another modification of the present invention, and a detection region in each illumination light sensor.

[Fig.11] A schematic plan view illustrating arrangement of a partial lighting section and an illumination light sensor in a light source according to still another modification of the present invention, and a detection region in each illumination light sensor.

[Fig.12] A schematic plan view illustrating arrangement of a partial lighting section and an illumination light sensor in a light source according to still another modification of the present invention, and a detection region in each illumination light sensor.

## BEST MODE FOR CARRYING OUT THE INVENTION

Hereafter, an embodiment of the present invention will be described in detail with reference to the accompanying drawings.

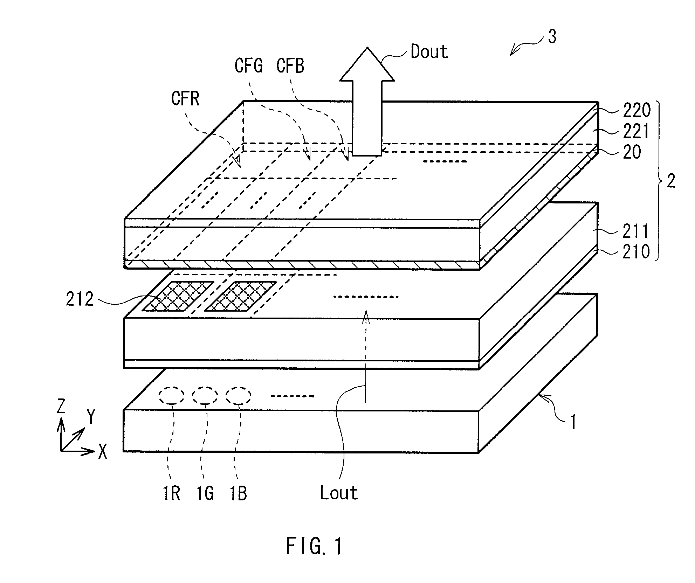

Fig.1 is an exploded perspective view schematically illustrating the overall configuration of an image display device (liquid crystal display device 3) according to an embodiment of the present invention. The liquid crystal display device 3 is a so-called transmissive liquid crystal display device emitting transmission light as a display light Dout, and includes a backlight device 1 and a transmissive liquid crystal display panel 2.

The liquid crystal display panel 2 includes a transmissive liquid crystal layer 20, a pair of substrates with the liquid crystal layer 20 in between, that is, a TFT (thin film transistor) substrate 211, which is a substrate arranged on the backlight device 1 side, and a facing electrode substrate 221, which is a substrate facing the TFT substrate 211, and polarizing plates 210 and 220, stacked on the opposite side of the TFT substrate 211 and on the opposite side of the facing electrode substrate 221, respectively, from the liquid crystal layer 20.

The TFT substrate 211 includes pixels arranged in a matrix form, and a pixel electrode 212 including a drive element such as a TFT is formed in each of the pixels.

The backlight device 1 employs an additive-color-mixing method in which an illumination light Lout as being a specific color light (in this case, a white light) is obtained by mixing a plurality of color lights (in this case, a red light, a green light and a blue light), and includes a light source (a light source 10 which will be described later) including a plurality of red LEDs 1R, a plurality of green LEDs 1G, and a plurality of blue LEDs 1B.

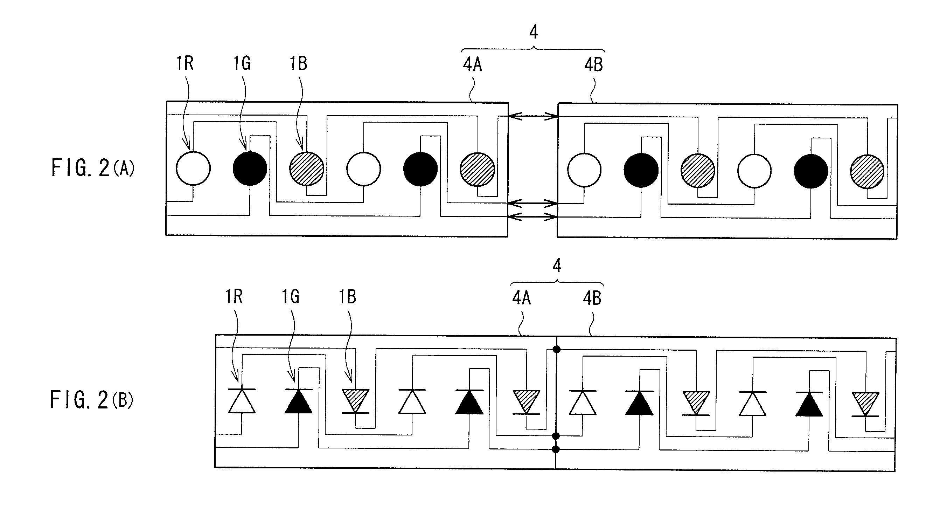

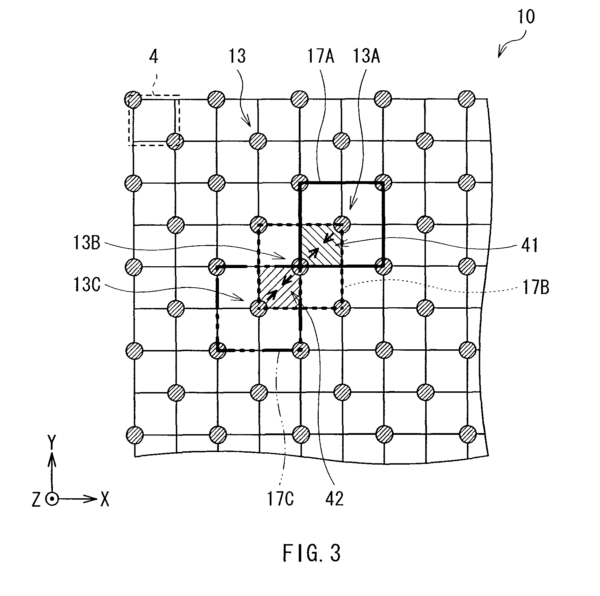

Figs.2A, 2B and 3 are plan views (X-Y plan views), each illustrating an example of arrangement of LEDs of each color in the backlight device 1.

As illustrated in Fig.2A, in the backlight device 1, each of unit cells 4A and 4B in a photo-emission section is formed with two sets of a red LED 1R, a green LED 1G, and a blue LED 1B, and a partial lighting section 4 as a unit in the photo-emission section is formed with these two unit cells 4A and 4B. Moreover, in each of the unit cells 4A and 4B, and between the unit cells 4A and 4B, LEDs of each color are connected in series to one another. Specifically, as illustrated in Fig.2B, an anode of an LED of each color is connected to a cathode of another LED of the same color.

For example, as illustrated in Fig.3, each of the partial lighting sections 4 with such a configuration is arranged in a matrix form in the light source 10, and may be controlled independently of one another as will be described later. On the light source 10, an illumination light sensor 13 is arranged at a corner of every two partial lighting sections 4 along an X axis and a Y axis. There are such arrangement patterns alternately in every other partial lighting section 4 along the X axis and the Y axis. The illumination light sensor 13 receives the illumination light Lout from the light source 10 in which the partial lighting section 4 performs lighting as a unit, and thereby obtains a photo-reception signal. Each of the illumination light sensors 13 is arranged so that the illumination light Lout from one partial lighting section 4 is received with two or more illumination light sensors 13 (in an example of Fig.3, the illumination light Lout is received with two illumination light sensors). Specifically, in the light source 10 indicted in Fig.3, a photo-reception region of each illumination light sensor 13 is a photo-reception region of 2x2 (with the illumination light sensor 13 at the center, the photo-reception region of each illumination light sensor 13 includes regions on the right side and the left side, respectively, of the illumination light sensor 13 along the x-axis, and regions on the upper side and the lower side, respectively, of the illumination light sensor 13 along the y-axis, each of the regions corresponding to one partial lighting section 4) so that the photo-reception regions of the illumination light sensor 13 partly overlap each other. Thereby, in the photo-reception regions partly overlapping each other, the illumination light Lout from one partial lighting section 4 is received with two illumination light sensors 13. More specifically, for example, in photo-reception regions 17A to 17C of illumination light sensors 13A to 13C, respectively, in the figure, since the photo-reception regions 17A and 17B partly overlap each other, in the overlapping region, the illumination light Lout from a partial lighting section 41 is received with two illumination light sensors 13A and 13B. Since the photo-reception regions 17B and 17C partly overlap each other, in the overlapping region, the illumination light Lout from a partial lighting section 42 is received with two illumination light sensors 13B and 13C.

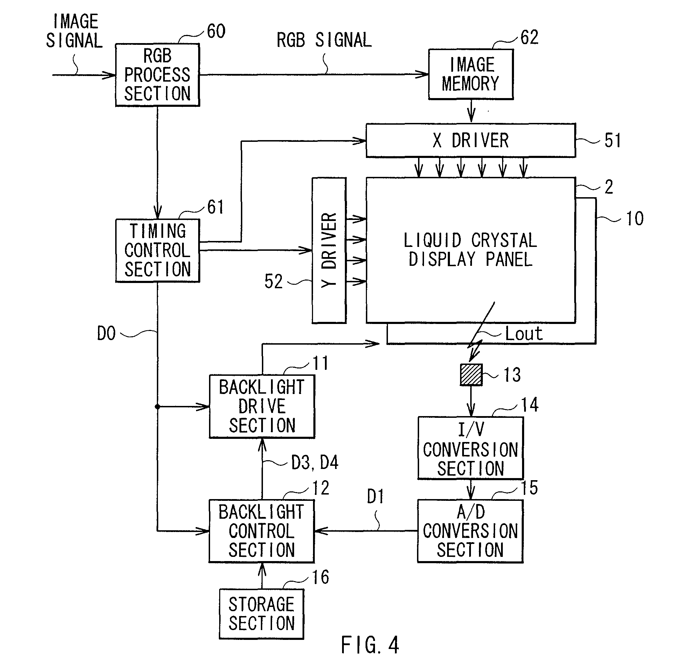

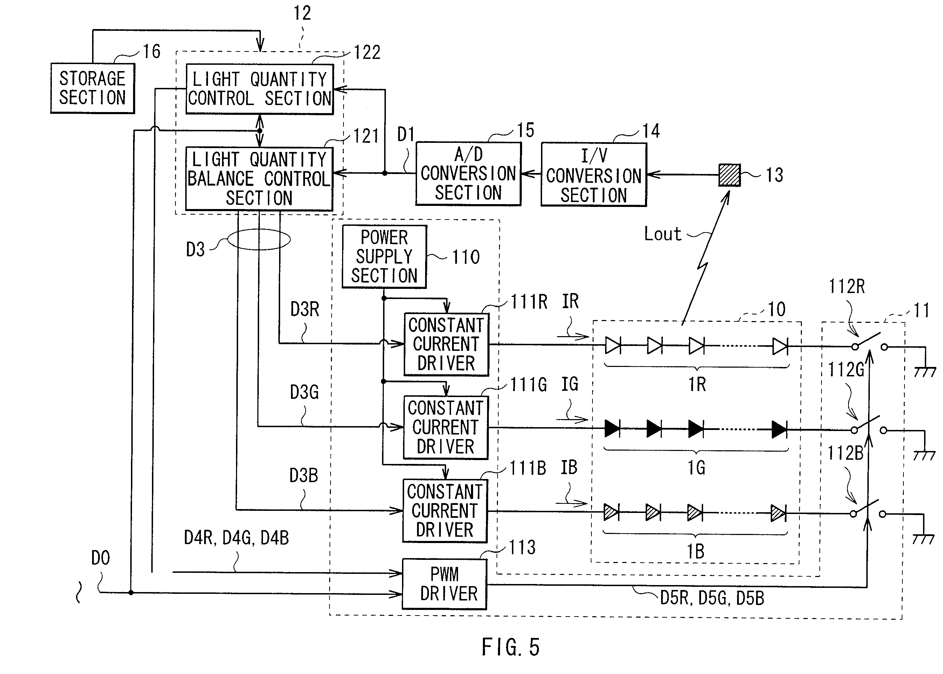

Next, with reference to Fig.4, the configuration of drive sections and control sections in the liquid crystal display panel 2 and the light source 10 will be described in detail. Fig.4 illustrates the block configuration of the liquid crystal display device 3. It is assumed that only one illumination light sensor 13 is arranged in the vicinity of the light source 10 in Fig.4 (and Fig.5 which will be described later) for convenience sake.

As illustrated in Fig.4, a drive circuit for driving the liquid crystal display panel 2 so as to display an image includes an X driver (data driver) 51, a Y driver (gate driver) 52, a timing control section (timing generator) 61, an RGB process section 60 (signal generator), and an image memory 62, the X driver 51 supplying a drive voltage to each pixel electrode 212 in the liquid crystal display panel 2, on the basis of an image signal, the Y driver 52 line-sequentially driving each pixel electrode 212 in the liquid crystal display panel 2, along a scanning line which is not illustrated in the figure, the timing control section 61 controlling the X driver 51 and the Y driver 52, the RGB process section 60 generating an RGB signal by processing an image signal from the outside, and the image memory 62 as being a frame memory storing the RGB signal from the RGB process section 60.

On the other hand, a section for driving and controlling the lighting operation of the light source 10 in the backlight device 1 includes a backlight drive section 11, a backlight control section 12, the above-described illumination light sensor 13, an I/V conversion section 14, an A/D conversion section 15, and a storage section 16.

The I/V conversion section 14 performs I/V (current/voltage) conversion on a photo-reception signal obtained in the illumination light sensor 13, thereby outputting photo-reception data as being an analogue voltage signal.

The A/D conversion section 15 samples the photo-reception data output from the I/V conversion section 14 at a predetermined timing, and performs A/D (analogue/digital) conversion on the photo-reception data, thereby outputting a photo-reception data D1 as being a digital voltage signal to the backlight control section 12.

As will be described later in detail, the storage section 16 is a memory storing an initial value of a photo-reception quantity ratio, which is a ratio among the photo-reception data D1 (photo-reception quantity) from two or more illumination light sensors based on light from one partial lighting section 4. Specifically, for example, the description will be made by using the light source indicated in Fig.3. The storage section 16 stores an initial value of the photo-reception quantity ratio for all of the partial lighting sections 4, such as an initial value (=D1(A10)/D1(B10)) of the photo-reception quantity ratio, which is a ratio between the photo-reception data D1 from two illumination light sensors 13A and 13B which receive the illumination light Lout from the partial lighting section 41, and an initial value (=D1(B20)/D1(C20)) of the photo-reception quantity ratio, which is a ratio between the photo-reception data D1 from two illumination light sensors 13B and 13C which receive the illumination light Lout from the partial lighting section 42.

The backlight control section 12 generates and outputs a control signal D3 (control signals D3R, D3G, and D3B which will be described later) which will be described later and a control signal D4 (control signals D4R, D4G, and D4B which will be described later) which is not illustrated in the figure, on the basis of the photo-reception data D1 supplied from the A/D conversion section 15, the initial value of the photo-reception quantity ratio stored in the storage section 16, and a control signal D0 supplied from the timing control section 61, thereby controlling the drive operation of the backlight drive section 11. The detailed configuration of the backlight control section 12 will be described later (fig.5).

On the basis of the control signals D3 and D4 supplied from the backlight control section 12 and the control signal D0 supplied from the timing control section 61, the backlight drive section 11 drives the light source 10 so that the partial lighting section 4 performs the lighting operation as a unit. The detailed configuration of the backlight drive section 11 will be described later (Fig.5).

Next, with reference to Fig.5, the detailed configuration of the above-described backlight drive section 11 and the above-described backlight control section 12 will be described. Fig.5 is a block diagram illustrating the detailed configuration of the backlight drive section 11 and the backlight control section 12, and the configuration of the light source 10, the illumination light sensor 13, the I/V conversion section 14, the A/D conversion section 15, and the storage section 16. The photo-reception data D1 is configured with a red photo-reception data D1R, a green photo-reception data D1G, and a blue photo-reception data D1B. The control signal D3 is configured with the control signal for red D3R, the control signal for green D3G, and the control signal for blue D3B. A control signal D4 is configured with the control signal for red D4R, the control signal for green D4G, and the control signal for blue D4B. A control signal D5 is configured with a control signal for red D5R, a control signal for green D5G, and a control signal for blue D5B. Here, it is assumed that all of the red LEDs 1R, the green LEDs 1G and the blue LEDs 1B in the light source 10 are connected in series to one another for convenience sake.

The backlight drive section 11 includes a power supply section 110, constant current drivers 111R, 111G, and 111B, switching elements 112R, 112G, and 112B, and a PWM driver 113, the constant current drivers 111R, 111G, and 111B supplying currents IR, IG, and IB to anodes of the red LED 1R, the green LED 1G, and the blue LED 1B, respectively, in the light source 10 with voltage supplied from the power supply section 110, on the basis of the control signal D3 (the control signal for red D3R, the control signal for green D3G, and the control signal for blue D3B) supplied from the backlight control section 12, the switching elements 112R, 112G, and 112B being connected between cathodes of the red LED 1R, the green LED 1G, and the blue LED 1B and grounds of these LEDs, respectively, the PWM driver 113 generating and outputting the control signal D5 (pulse signals: the control signal for red D5R, the control signal for green D5G, and the control signal for blue D5B) to the switching elements 112R, 112G, and 112B, on the basis of the control signal D4 (the control signal for red D4R, the control signal for green D4G, and the control signal for blue D4B) supplied from the backlight control section 12 and the control signal D0 supplied from the timing control section 61, and controlling the switching elements 112R, 112G, and 112B in PWM mode.

The backlight control section 12 includes a light quantity balance control section 121, and a light quantity control section 122. On the basis of the photo-reception data D1 supplied from the A/D conversion section 15, the initial value of the photo-reception quantity ratio stored in the storage section 16, and the control signal D0 supplied from the timing control section, the light quantity balance control section 121 generates and outputs the control signal D3 (the control signal for red D3R, the control signal for green D3G, and the control signal for blue D3B) to the constant current drivers 111R, 111G, and 111B, respectively, thereby controlling and changing the light quantity of the illumination light Lout while the color balance (white balance of white light) of the illumination light Lout from the light source 10 is maintained constant. On the basis of the photo-reception data D1 supplied from the A/D conversion section 15, the initial value of the photo-reception quantity ratio stored in the storage section 16, and the control signal D0 supplied from the timing control section 61, the light quantity control section 122 generates and outputs the control signal D4 (the control signal for red D4R, the control signal for green D4G, and the control signal for blue D4B) to the PWM driver 113, thereby controlling and changing the light quantity of the illumination light Lout from the light source 10.

Here, the backlight device 1 corresponds to a specific example of "an illumination means" of the present invention. The liquid crystal display panel 2 corresponds to a specific example of "a display means" and "a liquid crystal panel" of the present invention. The backlight drive section 11 corresponds to a specific example of "a drive means" of the present invention. The backlight control section 12 corresponds to a specific example of "a control means" of the present invention. The illumination light sensor 13 corresponds to a specific example of "a photo-reception element" of the present invention.

Next, operation of the liquid crystal display device 3 of the embodiment, which has such a configuration, will be described in detail.

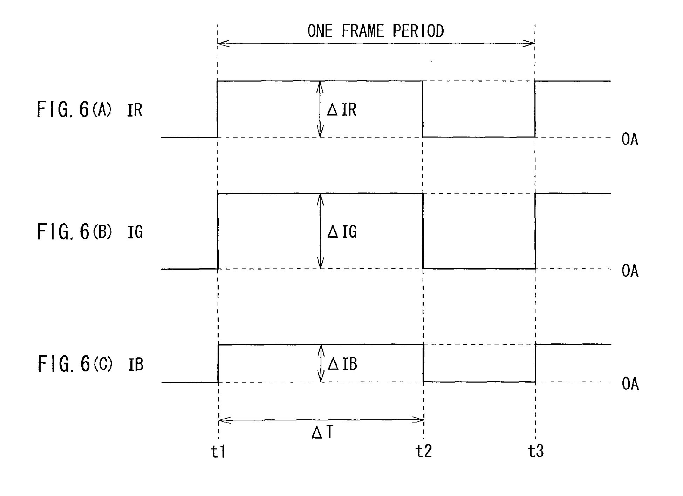

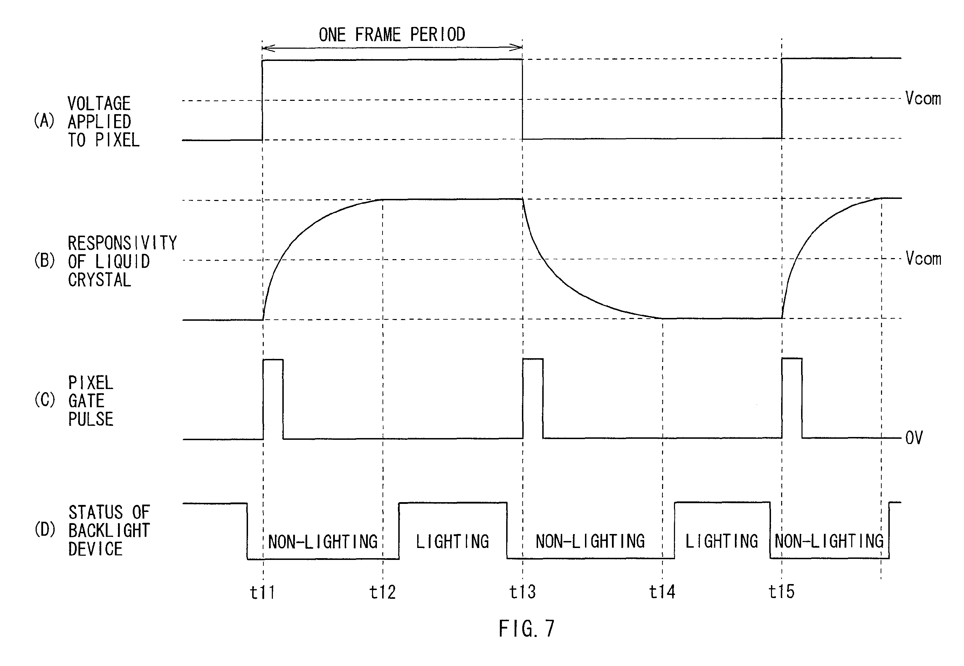

With reference to Figs.1, 2A to 2B, 3, 4, 5, 6, and 7, basic operation of the liquid crystal display device 3 of the embodiment will be described. Here, Fig.6 is a timing waveform diagram illustrating the lighting operation in the light source 10 in the backlight device 1. (A) illustrates the current IR flowing through the red LED 1R, (B) illustrates the current IG flowing through the green LED 1G, and (C) illustrates the current IB flowing through the blue LED 1B, respectively. Fig.7 is a timing waveform diagram roughly illustrating the operation of the whole liquid crystal display device 3. (A) illustrates voltage (voltage applied to pixels, and drive voltage) applied from the X driver 51 to a certain pixel electrode 212 in the liquid crystal display panel 2, (B) illustrates responsiveness (the condition of the actual electric potential in the pixel electrode 212) of liquid crystal molecules, and (C) illustrates voltage (pixel gate pulse) applied from the Y driver 52 to the gates of the TFT elements in the liquid crystal display panel 2, respectively.

In the backlight device 1, when the switching elements 112R, 112G, and 112B become on-state in the backlight drive section 11, respectively, the currents IR, IG, and IB flow from the constant current drivers 111R, 111G, and 111B to the red LED 1R, the green LED 1G, and the blue LED 1B in the light source 10, respectively. Thereby, the red photo-emission, the green photo-emission, and the blue photo-emission occur, and the illumination light Lout as the mixed light of these lights is emitted.

At this time, the control signal D0 is supplied from the timing control section 61 to the backlight drive section 11, and the control signal D5 (the control signal for red D5R, the control signal for green D5G, and the control signal for blue D5B) on the basis of this control signal D0 is supplied from the PWM driver 113 in the backlight drive section 11 to the switching elements 112R, 112G and 112B, respectively. Thereby, the switching elements 112R, 112G, and 112B become on-state at a timing in response to this control signal D0, and the lighting periods of the red LED 1R, the green LED 1G and the blue LED 1B are synchronized to the operation of the switching elements 112R, 112G and 112B. In other words, by time divisional drive using the control signal D5 as being a pulse signal, the red LED 1R, the green LED 1G, and the blue LED 1B are driven in PWM mode (drive is performed so that lighting period of each of the red LED 1R, the green LED 1G, and the blue LED 1B becomes variable).

At this time, the illumination light sensor 13 receives the illumination light Lout from the light source 10. Specifically, with a photodiode in the illumination light sensor 13, which is not illustrated in the figure, the illumination light Lout from the light source 10 is extracted, and the current is generated according to the light quantity of the illumination light Lout. Thereby, the photo-reception data of the current value is supplied to the I/V conversion section 14. The photo-reception data of the current value is converted to the photo-reception data of the analogue voltage value with the I/V conversion section 14. Then, this photo-reception data of the analogue voltage value is sampled in the A/D conversion section 15 at a predetermined timing, and converted to the photo-reception data D1 of the digital voltage value.

Here, in the backlight control section 12, on the basis of the photo-reception data D1 supplied from the A/D conversion section 15 and the initial value (will be described later in detail) of the photo-reception quantity ratio stored in the storage section 16, the control signals D3R, D3G, and D3B are supplied from the light quantity balance control section 121 to the constant current drivers 111R, 111G, and 111B, respectively. Thereby, ΔIR, ΔIG, and ΔIB, which are the magnitude of the currents IR, IG, and IB, respectively, that is, the photo-emission luminance (photo-emission intensity) of the LEDs 1R, 1G, and 1B, respectively, is adjusted so that the luminance and the chromaticity (color balance) of the illumination light Lout are maintained constant (photo-emission quantity of each partial lighting section 4 is maintained constant) (refer to Figs.6A to 6C). In the light quantity control section 122, on the basis of the photo-reception data D1 supplied from the A/D conversion section 15 and the initial value (will be described later in detail) of the photo-reception quantity ratio stored in the storage section 16, the control signal D4 (the control signal for red D4R, the control signal for green D4G, and the control signal for blue D4B) is generated and supplied to the PWM driver 113. Thereby, the period when the switching elements 112R, 112G, and 112B become on-state, that is, the lighting period ΔT of the LEDs 1R, 1G, and 1B of each color is adjusted (refer to Figs.6A to 6C). In this manner, on the basis of the illumination light Lout from the light source 10, ΔIR, ΔIG, and ΔIB (photo-emission intensity of the LEDs 1R, 1G, and 1B) as the magnitude of the currents IR, IG, and IB, respectively, and/or the lighting periods of the LEDs 1R, 1G, and 1B are controlled. Thereby, the partial lighting section 4 is controlled as a unit so that the light quantity of the illumination light Lout is maintained constant.

On the other hand, in the whole liquid crystal display device 3 of the embodiment, by the drive voltage (voltage applied to pixels) output from the X driver 51 and the Y driver 52 to the pixel electrode 212 on the basis of an image signal, the illumination light Lout from the light source 10 in the backlight device 1 is modulated in the liquid crystal layer 20, and output as the display light Dout from the liquid crystal display panel 2. In this manner, the backlight device 1 functions as a backlight (illumination device for liquid crystal) of the liquid crystal display device 3, and thereby the image is displayed with the display light Dout.

Specifically, for example, as illustrated in Fig.7C, the pixel gate pulse is applied from the Y driver 52 to the gates of the TFT elements of one horizontal line in the liquid crystal display panel 2. As illustrated in Fig.7A, the voltage applied to pixels on the basis of the image signal is applied from the X driver 51 to the pixel electrodes 212 of that horizontal line. At this time, as illustrated in Fig.7B, the responsivity (responsivity of the liquid crystal) of the actual electric potential of the pixel electrode 212 to the voltage applied to pixels is delayed (the voltage applied to pixels rises at a timing t11, while the actual electrical potential rises at a timing t12). Thus, in the backlight device 1, the lighting occurs in a period between the timing t12 and a timing t13, this is when the actual electrical potential is equal to the voltage applied to pixels. Thereby, the image display on the basis of the image signal is performed in the liquid crystal display device 3. In Figs.7A to 7D, the period between the timing t11 and the timing t13 corresponds to one horizontal period (one frame period). During one horizontal period between the timing t13 and a timing t15 thereafter, the operation also becomes similar to that of one horizontal period between the timing t11 and the timing t13, except that the voltage applied to pixels is inverted to a common electric potential Vcom for preventing an image-sticking of the liquid crystal, or the like.

In the liquid crystal display device 3, by using the signal (signal on the basis of an image signal) supplied from the RGB process section 60, the control signal D0 is supplied from the timing control section 61 to the PWM driver 113 in the backlight drive section 11. Thus, in the light source 10, for example, in the image display region in the liquid crystal display panel 2, only the partial lighting sections 4 arranged in a region corresponding to the image display region with luminance equal to or higher than a predetermined luminance may perform lighting operation.

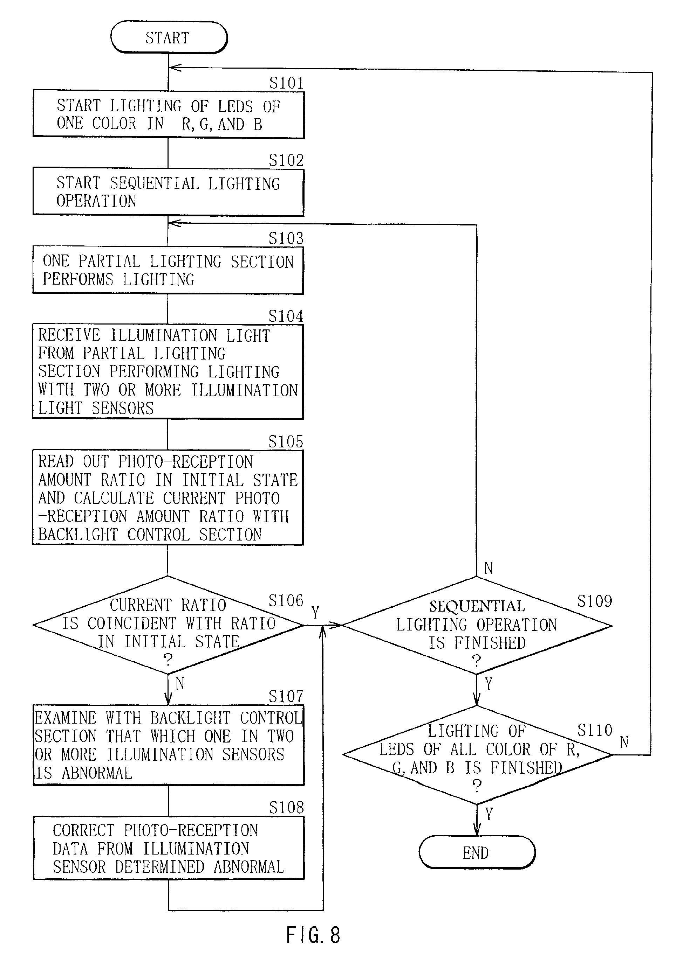

Next, with reference to Figs.8 in addition to Figs. 1, 2A to 2B, 3, 4, 5, 6, and 7, the control operation as the feature of the present invention will be described in detail. Fig.8 is a flow chart illustrating an example of the control operation (correction process for the photo-reception data D1 with the backlight control section 12) of the light source 10 in the backlight device 1 of the embodiment. It is assumed that the photo-reception operation of the illumination light Lout with the illumination light sensor 13 and the correction process for the photo-reception data D1 with the backlight control section 12, which will be described later, are performed, for example, in each frame period.

In the correction process, first, lighting of LEDs of one color in the red LEDs 1R, the green LEDs 1G, and the blue LEDs 1B starts (step S101 in Fig.8). That is, in one correction process in the backlight device 1, the correction process is performed for LEDs of each color in sequence (for the photo-reception data D1 of one color on the basis of the illumination light Lout of one color from LEDs of each color), and thereby the photo-emission quantity of each partial lighting section 4 may be controlled for LEDs of each color.

Next, in the light source 10, the lighting operation starts in sequence in the partial lighting section 4 as a unit, with LEDs of one color in the red LEDs 1R, the green LEDs 1G, and the blue LEDs 1B (steps S102). When a certain partial lighting section (for example, the partial lighting section 41 indicated in Fig.3) is lighted (step S103), the illumination Lout from that partial lighting section is received with two or more illumination light sensors 13 (step S104). Specifically, for example, the illumination light Lout from the partial lighting section 41 indicated in Fig.3 is received with two illumination light sensors 13A and 13B, and thereby the photo-reception data D1 (A1) and D1 (B1) from the illumination light sensors 13A and 13B, respectively, are supplied to the backlight control section 12.

Next, the backlight control section 12 (specifically, the light quantity balance control section 121 and the light quantity control section 122) occasionally examines whether or not the photo-reception quantity ratio, which is the ratio among the photo-reception data D1 (photo-reception quantity) from two or more illumination light sensors 13, is equal to the value of the photo-reception quantity ratio in the initial state stored in the storage section 16. Thereby, the photo-reception quantity ratio among two or more illumination light sensors 13 is controlled to maintain the value in the initial state (steps S105 to S108). Specifically, first, the backlight control section 12 reads out the value of the photo-reception quantity ratio in the initial state stored in the storage section 16, and calculates the current photo-reception quantity ratio on the basis of the photo-reception data D1 supplied from two or more illumination light sensors 13 (step S105). The backlight control section 12 determines whether or not the calculated current photo-reception quantity ratio is coincident with the read value of the photo-reception quantity ratio in the initial state (step S106). More specifically, for example, on the basis of the photo-reception data D1 (A1) and D1 (B1) from the illumination light sensors 13A and 13B, respectively, indicated in Fig.3, the backlight control section 12 calculates the current photo-reception quantity ratio (=D1(A1)/D1(B1)) to the illumination light Lout from the partial lighting section 41, and determines whether or not this current photo-reception quantity ratio is coincident with the photo-reception quantity ratio (=D1(A10)/D1(B10)) in the initial state.

Here, in the case where the backlight control section 12 determines that the current photo-reception quantity ratio is coincident with the photo-reception quantity ratio in the initial state (step S106: Y), the backlight control section 12 determines that the correction process for the current photo-reception data D1 (photo-reception quantity), for example, the photo-reception data D1 (A1) and D1 (B1), is not necessary, and proceeds to a subsequent process (step S109 which will be described later). On the other hand, in step S106, in the case where the backlight control section 12 determines that the current photo-reception quantity ratio is not coincident with the photo-reception quantity ratio in the initial state (step S106: N), the backlight control section 12 determines that the value of the photo-reception data D1 (for example, the photo-reception data D1 (A1) or the photo-reception data D1 (B1)) from one or more of the illumination light sensors 13 (for example, one or more of two illumination light sensors 13A and 13B with respect to the partial lighting section 41) in two or more of the illumination light sensors 13 with respect to one partial lighting section 4 is not normal. Accordingly, then, the backlight control section 12 utilizes the photo-reception quantity ratio in another partial lighting section which uses one or more of the illumination light sensors 13 in two or more of the illumination light sensors 13 with respect to one partial lighting section 4, and thereby determines the illumination light sensor which has the out-of-ordinary value of the photo-reception data D1, in two or more illumination light sensors (determines which one is the abnormal illumination light sensor in two or more illumination light sensors) (step S107).

Specifically, for example, in the light source 10 indicated in Fig.3, with respect to the illumination light Lout from the partial lighting section 41, the current photo-reception quantity ratio from two illumination light sensors 13A and 13B is calculated by (D1(A1)/D1(B1)), and the photo-reception quantity ratio in the initial state is calculated by (D1(A10)/D1(B10)). In the photo-reception quantity ratio in another partial lighting section 42 which uses the illumination light sensor 13B in these two illumination light sensors 13A and 13B, and another illumination light sensor 13C, the current photo-reception quantity ratio is calculated by (D1(B2)/D1(C2)), and the photo-reception quantity ratio in the initial state is calculated by (D1(B20)/D1(C20)). In this case, the backlight control section 12 determines that the value of the current photo-reception data D1 (A1) from the illumination light sensor 13A in the illumination light sensors 13A and 13B is not normal (the illumination light sensor 13A is abnormal), when the following is established: $(D1(A1)/D1(B1)) \neq (D1(A10)/D1(B10))$, and $(D1(B2)/D1(C2)) = (D1(B20)/D1(C20))$. On the other hand, the backlight control section 12 determines that the value of the current photo-reception data D1 (B1) from the illumination light sensor 13B is not normal (the illumination light sensor 13B is abnormal), when the following is established: $(D1(A1)/D1(B1)) \neq (D1(A10)/D1(B10))$, and $(D1(B2)/D1(C2)) \neq (D1(B20)/D1(C20))$, under such conditions that the number of the abnormal illumination light sensors is one at a certain moment. Moreover, by utilizing the photo-reception quantity ratio in another partial lighting section (not illustrated in the figure) which uses another illumination light sensor 13D (not illustrated in the figure) in addition to the illumination light sensor 13C, the backlight control section 12 may determine that the value of the current photo-reception data D1 (B1) from the illumination light sensor 13B is not normal (the illumination light sensor 13B is abnormal), when the following is established: $(D1(A1)/D1(B1)) \neq (D1(A10)/D1(B10))$, $(D1(B2)/D1(C2)) \neq (D1(B20)/D1(C20))$, and $(D1(C3)/D1(D3)) \neq (D1(C30)/D1(D30))$.

Next, the backlight control section 12 corrects the value of the photo-reception data D1 (photo-reception data D1 from the illumination light sensor 13, which is determined abnormal) determined not normal in step S107, and thereby controls the current photo-reception quantity ratio to be coincident with the value of the photo-reception quantity ratio in the initial state (step S108). Specifically, for example, in the light source 10 indicated in Fig.3, in the case where the current photo-reception data D1 (A1) from the illumination light sensor 13A in the illumination light sensors 13A and 13B is determined not normal, the correction process is performed with formula (1) below, and photo-reception data D1'(A1) after the correction is calculated. On the other hand, in the case where the current photo-reception data D1(B1) from the illumination light sensor 13B is determined not normal, the correction process is performed with formula (2) below, and photo-reception data D1'(B1) after the correction is calculated. After such correction process (step S108), it proceeds to step S109.

formula 1

$$D1'(A1) = D1(A1) \times \{D1(A10)/D1(B10) \times D1(B1)/D1(A1)\} \cdots (1)$$

$$D1'(B1) = D1(B1) \times \{D1(B10)/D1(A10) \times D1(A1)/D1(B1)\} \cdots (2)$$

Next, the backlight control section 12 determines whether or not the sequential lighting operation with each partial lighting section 4 in the light source 10 is finished, on the basis of the control signal D0 or the like from the timing control section 61(steps S109). In the case where the backlight control section 12 determines that the lighting operation is not finished yet (step S109: N), it returns to step S103 and next partial lighting section 4 performs lighting. On the other hand, in step S109, in the case where the backlight control section 12 determines that the sequential lighting operation with each partial lighting section 4 in the light source 10 is finished (step S109: Y), the backlight control section 12 determines whether or not lighting of LEDs of all colors, the red LEDs 1R, the green LEDs 1G, and the blue LEDs 1B, is finished, on the basis of the control signal D0 or the like from the timing control section 61 (whether or not the correction process for the photo-reception data D1 on the basis of the illumination light Lout from LEDs of all colors is completed) (step S110).

In step S110, in the case where the backlight control section 12 determines that lighting of the LEDs of all colors, the red LEDs 1R, the green LEDs 1G, and the blue LEDs 1B, is not finished (step S110: N), it returns to step S101 and lighting of LEDs of next color starts (the correction process for the photo-reception data D1 on the basis of the illumination light Lout from the LEDs of next color starts). On the other hand, in step S110, in the case where the backlight control section 12 determines that lighting of the LEDs of all colors, the red LEDs 1R, the green LEDs 1G, and the blue LEDs 1B, is finished (step S110: Y), the whole process is completed. On the basis of the photo-reception data D1' after such a correction process, the control operation is performed to the backlight drive section 11 and the light source 10 described above with the backlight control section 12.

In this manner, in the embodiment, by using the illumination light Lout from the light source 10 in which the partial lighting section 4 performs lighting as a unit, the image display on the basis of the image signal is performed in the liquid crystal display panel 2. The illumination light Lout from the light source 10 in which the partial lighting section 4 performs lighting as a unit is received with the plurality of illumination light sensors 13 in the light source 10. On the basis of the light quantity (photo-reception data D1) of the light received with these illumination light sensors 13, the photo-emission quantity of each partial lighting section 4 is controlled. Here, in the embodiment, by arrangement of the illumination light sensors 13, the illumination light Lout from one partial lighting section 4 is received with two or more illumination light sensors 13. Consequently, the reliability of the value (photo-reception quantity value) of the photo-reception data D1 from the illumination light sensor 13 improves. Therefore, even in the case where the photo-reception characteristics are varied among the illumination light sensors 13 due to deterioration with time, external factors, or the like, such variation in the photo-reception characteristics may be suppressed, and the variation in the photo-emission characteristics may also be reduced among the partial lighting sections 4. Thus, in the image display device including the light source performing the partial lighting operation, it is possible to improve the display quality by reducing luminance non-uniformity and chromaticity non-uniformity in the display image.

Specifically, each of the illumination light sensors 13 is arranged so that the photo-reception regions of two or more illumination light sensors 13 with respect to one partial lighting section 4 partly overlap each other. Thus, in the photo-reception regions partly overlapping each other, the illumination light Lout from one partial lighting section 4 may be received with two or more illumination light sensors 13.

With the backlight control section 12, the photo-reception quantity ratio, which is the ratio among the photo-reception data D1 (photo-reception quantity) from two or more illumination light sensors 13 based on light from one partial lighting section 4, is controlled to maintain the value in the initial state. Thus, not the photo-reception data D1 itself from each illumination light sensor 13, but the ratio among the photo-reception data D1 from each illumination light sensor 13 is controlled and maintained. Thus, even in the case where the value of the photo-reception data D1 from each illumination light sensor 13 changes with deterioration with time or the like, the variation in the photo-reception characteristics may be suppressed among each of the illumination light sensors 13, and the variation in the photo-emission characteristics may also be reduced among the partial lighting sections 4.

With the backlight control section 12, it is occasionally examined whether or not the above-described photo-reception quantity ratio is coincident with the value in the initial state. In the case where it is determined from the examination that the current photo-reception quantity ratio is not coincident with the value in the initial state, the backlight control section 12 determines that the value of the photo-reception data D1 from one or more light illumination light sensors in two or more illumination light sensors 13 with respect to one partial lighting section 4 is not normal. By correcting the value of the photo-reception data D1, which is determined not normal, the current photo-reception quantity ratio is coincident with the value in the initial state. Thus, the ratio among the photo-reception data D1 from each illumination light sensor 13 may be controlled and maintained as described above.

By using the photo-reception quantity ratio in another partial lighting section which uses one or more illumination light sensors in two or more illumination light sensors 13 with respect to one partial lighting section 4, the backlight control section 12 determines the illumination light sensor which has the abnormal value of the photo-reception data D1, in two or more illumination light sensors 13. Thus, it is possible to perform the correction process for the photo-reception data D1 as described above.

Moreover, with the backlight control section 12, on the basis of the photo-reception data D1' after the correction process, the control is performed so that the lighting period $\Delta t$, and/or photo-emission intensities (photo-emission luminances) $\Delta IR$, $\Delta IG$, and $\Delta IB$ of each partial lighting section 4 is variable, and thereby the photo-emission quantity of each partial lighting section 4 is maintained constant. Thus, by using two parameters of the lighting period $\Delta t$, and photo-emission intensities (photo-emission luminances) $AIR$, $\Delta IG$, and $\Delta IB$, it is possible to control the photo-emission quantity of each partial lighting section 4, and it is possible to improve control flexibility.

Hereinbefore, although the present invention is described with the embodiment, the present invention is not limited to the embodiment, and various modifications may be made.

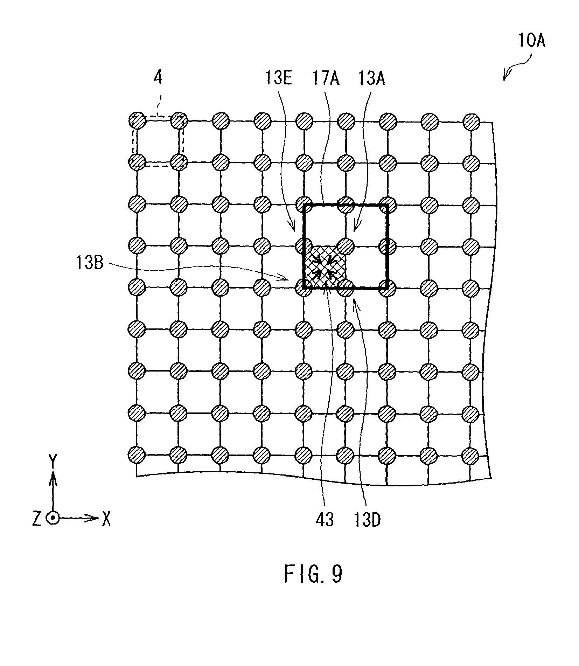

For example, in the embodiment, although the case where the illumination light Lout from one partial lighting section 4 is received with two illumination light sensors 13 is described, the number of the illumination light sensors 13 receiving each illumination light Lout is not limited to this. For example, like a light source 10A indicated in Fig.9, by arranging the illumination light sensors 13 at four corners of each partial lighting section 4, the illumination light Lout from one partial lighting section 4 may be received with four illumination light sensors 13. Specifically, for example as indicated in Fig.9, the illumination light Lout from one partial lighting section 43 may be received with four illumination light sensors 13A, 13B, 13D, and 13E arranged at four corners of the partial lighting section 43. In the case of such a configuration, the overlapping degree of the photo-reception regions of each of the illumination light sensors 13 increases, and thereby it is possible to perform the correction process and control process of the light source 10, on the basis of the photo-reception data D1 from more illumination light sensors 13. Therefore, in addition to the effects described in the embodiment, it is possible to reduce the variation in the photo-emission characteristics among the partial lighting sections 4, and it is possible to improve the display quality by reducing the luminance non-uniformity, the chromaticity non-uniformity, and the like in the display image.

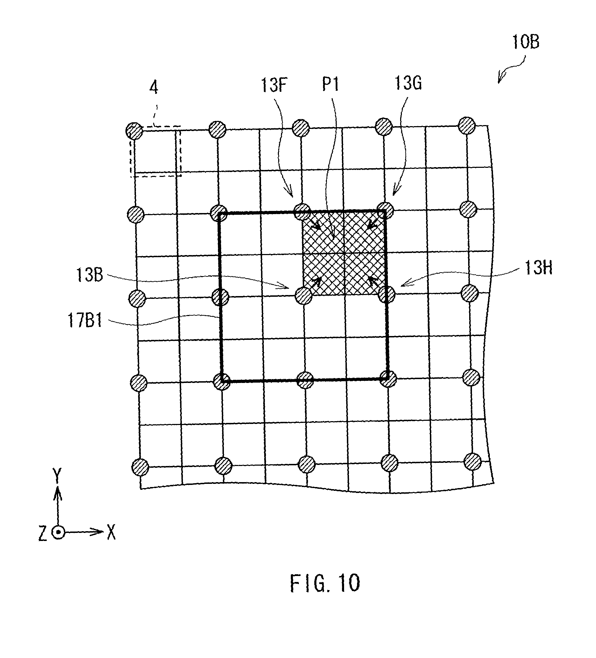

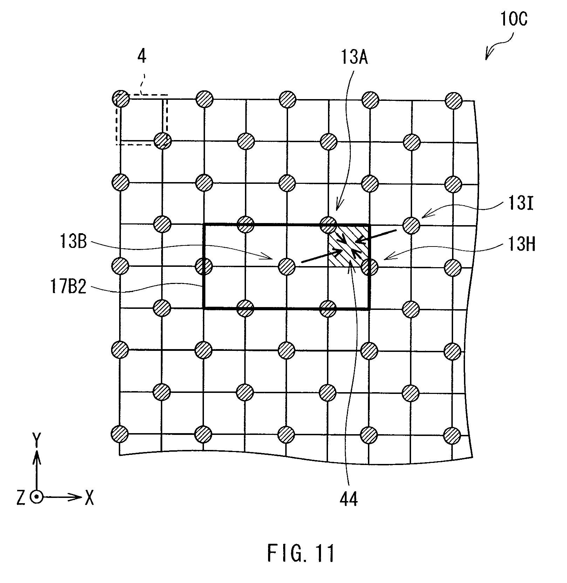

In the embodiment, although the case where the photo-reception region of each illumination light sensor 13 is set to the photo-reception region of $2 \times 2$ is described, the size and shape of the photo-reception region, and arrangement of each illumination light sensor 13 may be freely set, as long as the illumination light Lout from one partial lighting section 4 may be received with two or more illumination light sensors 13. Specifically, for example, in a light source 10B indicated in Fig. 10, the photo-reception region of each illumination light sensor 13 is set to the photo-reception region (for example, a photo-reception region 17B1 of the illumination light sensor 13B) of $4 \times 4$, and the illumination light Lout from each partial lighting section 4 in the region indicated with, for example, reference numeral P1 is received with four illumination light sensors 13B, 13F, 13G, and 13H. In the case of such a configuration, it is possible to improve the overlapping degree of the photo-reception regions, and it is also possible to reduce the cost of parts by reducing the number of illumination light sensors 13. For example, in a light source 10C indicated in Fig. 11, the photo-reception region of each light illumination light sensor 13 is set to the photo-reception region (for example, a photo-reception region 17B2 of the illumination light sensor 13B) of $4 \times 2$, and, for example, the illumination light Lout from the partial lighting section 44 is received with four illumination light sensors 13A, 13B, 13H, and 131. In this manner, even in the case where the distances from two or more illumination light sensors 13 to the partial lighting section 4 which receives the light are not equal to each other, since the photo-reception quantity ratio, which is the ratio of the photo-reception data D1 from each illumination light sensor 13, is controlled to maintain the value in the initial state in the backlight control section 12, it is possible to obtain effects similar to those of the embodiment.

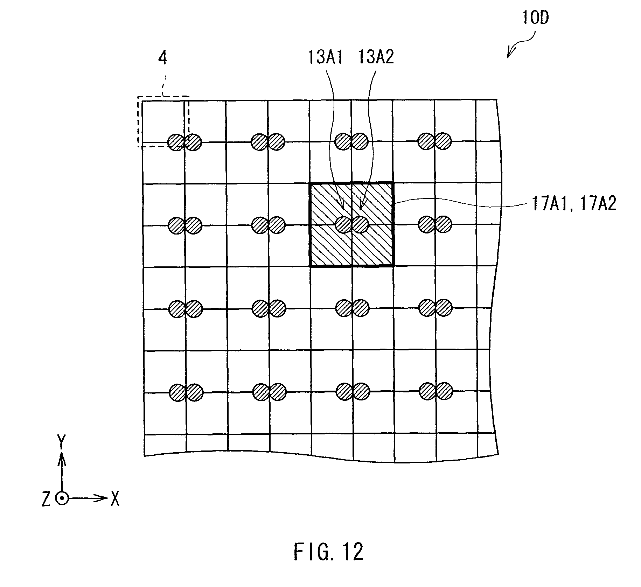

In the embodiment, the case where each of the illumination light sensors 13 is arranged so that the photo-reception regions of two or more illumination light sensors 13 with respect to one partial lighting section 4 partly overlap each other is described. However, for example, like a light source 10D indicated in Fig.12, each of the illumination light sensors 13 may be arranged so that the photo-reception regions of two or more illumination light sensors 13 with respect to one partial lighting section 4 are coincident with each other (for example, photo-reception regions 17A1 and 17A2 of two illumination light sensors 13A1 and 13A2 arranged in the approximately-same position, respectively), and thereby, in the photo-reception regions (for example, the photo-reception regions 17A1 and 17A2) coincident with each other, the illumination light Lout from one partial lighting section (for example, four partial lighting sections in the photo-reception regions 17A1 and 17A2) may be received with two or more photo-reception elements (for example, two illumination light sensors 13A1 and 13A2).

In the embodiment, the case is described where the backlight control section 12 controls the photo-reception quantity ratio, which is the ratio among the photo-reception data D1 (photo-reception quantity) from two or more illumination light sensors based on light from one partial lighting section 4, to maintain the value in the initial state. However, the backlight control section 12 may control not such photo-reception quantity ratio, but an absolute value itself of the photo-reception data D1 from each illumination light sensor 13 to maintain the value in the initial state.

The photo-reception operation of the illumination light Lout with the illumination light sensor 13 and the correction process for the photo-reception data D1 with the backlight control section 12 as described in the embodiment are not limited to the case where these operation and process are performed for each frame period. For example, these operation and process may be thinned to be performed only once in a plurality of frame periods, at a predetermined timing (for example, at a timing when the power of the image display device turns on), or the like.

In the embodiment, the case where the light source 10 includes the red LEDs 1R, the green LEDs 1G, and the blue LEDs 1B is described. However, in addition to (or in substitution for) these LEDs, the light source 10 may include LEDs emitting another color light. In the case where the light source 10 includes LEDs of four or more color lights, the color reproductivity region increases, and it is possible to express more various colors.

In the embodiment, the backlight device 1 employing an additive-color-mixing method in which the light source 10 includes the plurality of the red LEDs 1R, the green LEDs 1G, and the blue LEDs 1B, and the plurality of color lights (the red light, the green light, and the blue light) are mixed to obtain the illumination light Lout as being a specific color light (white light) is described. However, it is also possible that the light source is configured with one type of LEDs, and the backlight device emits illumination light of one color. Even with such a configuration, it is possible to reduce the variation in the luminance of the illumination light, with a simple configuration.

In the embodiment, the case where the liquid crystal display device 3 is a transmissive liquid crystal display device including the backlight device 1 is described. However, it is also possible that a front light device is configured with the light source device of the present invention, and the liquid crystal display device is a reflective type.

Moreover, in the embodiment, the image display device (the liquid crystal display device 3) including the liquid crystal display panel 2 is described as a specific example of the display means. However, for example, the present invention may be applied to an image display device (for example, an advertising sign or the like) including, as a display means, a film with an image such as a predetermined still image.

## Claims

1. An image display device comprising an illumination means for emitting light, and a display means for displaying an image by using light emitted from the illumination means, the illumination means including:

   a light source including a plurality of partial lighting sections each controlled separately;
   a drive means for driving the light source to allow each of the partial lighting section to be lit up separately;
   a plurality of photo-reception elements receiving light from the light source in which each of the partial lighting section is lit up separately; and
   a control means for controlling the drive means based on amount of light received with the photo-reception elements, and controlling photo-emission quantity of each of the partial lighting sections, wherein
   the photo-reception elements are arranged so that light from one partial lighting section is to be received with two or more of the photo-reception elements.

2. The image display device according to claim 1, wherein
   the control means controls a photo-reception quantity ratio to maintain an initial state value, the photo-reception quantity ratio being defined as a ratio among photo-reception quantity values in the two or more of the photo-reception elements, each of the photo-reception quantity values corresponding to light from the one partial lighting section.

3. The image display device according to claim 2, wherein
   the control means occasionally examines whether or not the photo-reception quantity ratio is coincident with the initial state value, and
   when it turns out from the examination that a current photo-reception quantity ratio is not coincident with the initial state value, the control means determines that the photo-reception quantity values in one or more of the two or more photo-reception elements allocated to the one partial lighting section are out of ordinary, and performs control to correct the out-of-ordinary photo-reception quantity value so that the current photo-reception quantity ratio is coincident with the initial state value.

4. The image display device according to claim 3, wherein
the control means determines, from the two or more of the photo-reception elements, one or more photo-reception elements which generates the out-of-ordinary photo-reception quantity values, through utilizing a photo-reception quantity ratio obtained for another partial lighting section using one or more of the two or more photo-reception elements allocated to the one partial lighting section

5. The image display device according to claim 1, wherein
the control means controls the photo-emission quantity in each of the partial lighting sections to be maintained constant.

6. The image display device according to claim 5, wherein
the control means controls the photo-emission quantity in each of the partial lighting sections to be maintained constant through varying a lighting period or photo-emission intensity or both of them in each of the partial lighting sections.

7. The image display device according to claim 1, wherein
each of the photo-reception elements is arranged so that regions, where the two or more photo-reception elements allocated to the one partial lighting section take charge of photo-reception, partly overlap one another, and so that light from the one partial lighting section in the regions partly overlapping one another is received with the two or more photo-reception elements.

8. The image display device according to claim 1, wherein
each of the photo-reception elements is arranged so that regions, where the two or more photo-reception elements allocated to the one partial lighting section take charge of photo-reception, coincide with one another, and so that the light from the one partial lighting section in the regions coinciding with one another is received with two or more of the photo-reception elements.

9. The image display device according to claim 1, wherein the display means is a liquid crystal panel displaying an image by modulating the light emitted from the illumination means based on an image signal, allowing the image display device to be configured as a liquid crystal display device.

**Amended claims under Art. 19.1 PCT**

1. (Amended) An image display device comprising an illumination means for emitting light, and a display means for displaying an image by using light emitted from the illumination means, the illumination means including:

a light source including a plurality of partial lighting sections each controlled separately;
a drive means for driving the light source to allow each of the partial lighting section to be lit up separately;
a plurality of photo-reception elements receiving light from the light source in which each of the partial lighting section is lit up separately; and
a control means for controlling the drive means based on amount of light received with the photo-reception elements, and controlling photo-emission quantity of each of the partial lighting sections, wherein
the photo-reception elements are arranged so that light from one partial lighting section is to be received with two or more of the photo-reception elements, and
the control means controls a photo-reception quantity ratio to maintain an initial state value, the photo-reception quantity ratio being defined as a ratio among photo-reception quantity values in the two or more of the photo-reception elements, each of the photo-reception quantity values corresponding to light from the one partial lighting section.

2. (Canceled)

3. (Amended) The image display device according to claim 1, wherein
the control means occasionally examines whether or not the photo-reception quantity ratio is coincident with the initial state value, and
when it turns out from the examination that a current photo-reception quantity ratio is not coincident with the initial state value, the control means determines that the photo-reception quantity values in one or more of the two or more photo-reception elements allocated to the one partial lighting section are out of ordinary, and performs control to correct the out-of-ordinary photo-reception quantity value so that the current photo-reception quantity ratio is coincident with the initial state value.

**4.** The image display device according to claim 3, wherein
the control means determines, from the two or more of the photo-reception elements, one or more photo-reception elements which generates the out-of-ordinary photo-reception quantity values, through utilizing a photo-reception quantity ratio obtained for another partial lighting section using one or more of the two or more photo-reception elements allocated to the one partial lighting section

**5.** The image display device according to claim 1, wherein
the control means controls the photo-emission quantity in each of the partial lighting sections to be maintained constant.

**6.** The image display device according to claim 5, wherein
the control means controls the photo-emission quantity in each of the partial lighting sections to be maintained constant through varying a lighting period or photo-emission intensity or both of them in each of the partial lighting sections.

**7.** The image display device according to claim 1, wherein
each of the photo-reception elements is arranged so that regions, where the two or more photo-reception elements allocated to the one partial lighting section take charge of photo-reception, partly overlap one another, and so that light from the one partial lighting section in the regions partly overlapping one another is received with the two or more photo-reception elements.

**8.** The image display device according to claim 1, wherein
each of the photo-reception elements is arranged so that regions, where the two or more photo-reception elements allocated to the one partial lighting section take charge of photo-reception, coincide with one another, and so that the light from the one partial lighting section in the regions coinciding with one another is received with two or more of the photo-reception elements.

**9.** The image display device according to claim 1, wherein the display means is a liquid crystal panel displaying an image by modulating the light emitted from the illumination means based on an image signal, allowing the image display device to be configured as a liquid crystal display device.

FIG. 1

FIG. 2(A)

FIG. 2(B)

FIG. 3

FIG. 4

FIG. 5

ONE FRAME PERIOD

FIG. 6(A)  IR

ΔIR

0A

FIG. 6(B)  IG

ΔIG

0A

FIG. 6(C)  IB

ΔIB

0A

ΔT

t1                    t2          t3

FIG. 7

(A) VOLTAGE APPLIED TO PIXEL

(B) RESPONSIVITY OF LIQUID CRYSTAL

(C) PIXEL GATE PULSE

(D) STATUS OF BACKLIGHT DEVICE

ONE FRAME PERIOD

Vcom

Vcom

0V

NON-LIGHTING — t11 — LIGHTING — t12 — LIGHTING — t13 — NON-LIGHTING — t14 — LIGHTING — t15 — NON-LIGHTING

START

START LIGHTING OF LEDS OF
ONE COLOR IN R, G, AND B                    S101

START SEQUENTIAL LIGHTING
OPERATION                                   S102

ONE PARTIAL LIGHTING SECTION
PERFORMS LIGHTING                           S103

RECEIVE ILLUMINATION LIGHT
FROM PARTIAL LIGHTING
SECTION PERFORMING LIGHTING
WITH TWO OR MORE ILLUMINATION
LIGHT SENSORS                               S104

READ OUT PHOTO-RECEPTION
AMOUNT RATIO IN INITIAL STATE
AND CALCULATE CURRENT PHOTO
-RECEPTION AMOUNT RATIO WITH
BACKLIGHT CONTROL SECTION                   S105

CURRENT RATIO
IS COINCIDENT WITH RATIO        S106   Y
IN INITIAL STATE
?

N

EXAMINE WITH BACKLIGHT CONTROL
SECTION THAT WHICH ONE IN TWO
OR MORE ILLUMINATION SENSORS
IS ABNORMAL                                 S107

CORRECT PHOTO-RECEPTION
DATA FROM ILLUMINATION
SENSOR DETERMINED ABNORMAL                  S108

N

SEQUENTIAL
LIGHTING OPERATION              S109
IS FINISHED
?

Y

LIGHTING OF
LEDS OF ALL COLOR OF R,         S110   N
G, AND B IS FINISHED
?

Y

END

FIG. 8

FIG. 9

FIG. 10

**FIG. 11**

FIG. 12

**INTERNATIONAL SEARCH REPORT**

| International application No. |
|---|
| PCT/JP2008/058375 |

A.  CLASSIFICATION OF SUBJECT MATTER
*G09G3/20*(2006.01)i, *G02F1/133*(2006.01)i, *G09G3/34*(2006.01)i, *G09G3/36*
(2006.01)i, *H05B37/02*(2006.01)i

According to International Patent Classification (IPC) or to both national classification and IPC

B.  FIELDS SEARCHED

Minimum documentation searched (classification system followed by classification symbols)
G09G3/20, G02F1/133, G09G3/34, G09G3/36, H05B37/02

Documentation searched other than minimum documentation to the extent that such documents are included in the fields searched
| Jitsuyo Shinan Koho | 1922-1996 | Jitsuyo Shinan Toroku Koho | 1996-2008 |
| Kokai Jitsuyo Shinan Koho | 1971-2008 | Toroku Jitsuyo Shinan Koho | 1994-2008 |

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| X | JP 2006-278368 A  (Sony Corp.), 12 October, 2006 (12.10.06), Example 5; Fig. 14 (Family: none) | 1 |
| A | JP 2005-258403 A  (Hitachi, Ltd., Hitachi Displays, Ltd.), 22 September, 2005 (22.09.05), Full text; all drawings & US 2005/0184952 A1 | 1 |
| A | JP 2007-52102 A  (Sharp Corp.), 01 March, 2007 (01.03.07), Full text; all drawings (Family: none) | 1 |

☐  Further documents are listed in the continuation of Box C.     ☐  See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 09 July, 2008 (09.07.08) | 22 July, 2008 (22.07.08) |

| Name and mailing address of the ISA/ | Authorized officer |
|---|---|
| Japanese Patent Office | |
| Facsimile No. | Telephone No. |

Form PCT/ISA/210 (second sheet) (April 2007)

**INTERNATIONAL SEARCH REPORT**

| International application No. |
| --- |
| PCT/JP2008/058375 |

**Box No. II**     **Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box No. III**     **Observations where unity of invention is lacking (Continuation of item 3 of first sheet)**

This International Searching Authority found multiple inventions in this international application, as follows:

   (See the extra sheet)

1. ☐ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☒ No required additional search fees were timely paid by the applicant.   Consequently, this international search report is restricted to the invention first mentioned in the claims; it is covered by claims Nos.:  1 .

**Remark on Protest**
the

☐ The additional search fees were accompanied by the applicant's protest and, where applicable, payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (April 2007)

**INTERNATIONAL SEARCH REPORT**

International application No.

PCT/JP2008/058375

Continuation of Box No.III of continuation of first sheet(2)

Claim 1 is an independent claim and claims 2-9 are dependent claims.

A technical feature common to the inventions in claims 2-9 is the invention in claim 1 in which "the lighting means is provided with a light source having a plurality of partial ignition operable light units that are independently controllable with each other, a driving means for driving the light source to ignite in a unit of the partial ignition operable light unit, a light receiving element for receiving light from the light source that ignites in a unit of the partial ignition operable light unit, and a control means for controlling the driving means in accordance with a light amount received by the light receiving element to adjust a light emitting amount of the partial ignition operable light unit, wherein the disposition of the light receiving units is arranged for not less than two light receiving elements to receive the light from one of the partial ignition operable light units.

The examiner has carried out the prior art search on the assumption that invention in claim 1 is "the invention first described in the claims (main invention)".

Since a result of search shows that the invention in claim 1 is disclosed in the prior art document, it has become clear that the common matter is not novel (the prior art document: JP 2006-278368 A).

Since, in an embodiment 5 of JP 2006-278368 A, each of "n LED light emitting devices (71-1 through 71-n) has "a photodiode substrate (41)", it corresponds to "a partial ignition operable light unit" of the present application. Each of "n LED light emitting devices (71-1 through 71-n) has a plurality of "light receiving elements" corresponding to RGB.

The embodiment 5 of JP 2006-278368 A has an effect to reduce dispersion of brightness and chromaticity.

Thus, the invention in claim 1 of this application is not distinguishable from the invention disclosed in JP 2006-278368 A.

As a result, the technical feature common to claims 1-9 is not the special technical feature in the meaning of PCT Rule 13.2 (a technical feature that defines a contribution which each of the claimed inventions, considered as a whole, makes over the prior art).

Therefore, since there is no "special technical feature" common to the inventions in claims 1-9, a group of those inventions are not deemed to be linked to form a single general inventive concept.

In conclusion, the claims of the present application include the following six inventions: [1], [2-4], [5-6], [7], [8] and [9].

Form PCT/ISA/210 (extra sheet) (April 2007)

**EP 2 154 669 A1**

## REFERENCES CITED IN THE DESCRIPTION

### Patent documents cited in the description

- JP 2001142409 A
- JP 2005302737 A